# EUROPÄISCHE PATENTSCHRIFT

(11) **EP 1 671 546 B1**
(45) Veröffentlichungstag und Bekanntmachung des Hinweises auf die Patenterteilung: **20.02.2008**
(21) Anmeldenummer: 04029574.3
(22) Anmeldetag: 14.12.2004
(51) Int. Cl.: A22C 11/12

(54) **Formvorrichtung und Formverfahren zum Formen von Kuppen an Wurstenden**
Moulding apparatus and moulding method for moulding domes at the ends of sausages
Appareil de moulage et procédé de moulage pour mouler des dômes aux extrémités de saucisses

(43) Veröffentlichungstag der Anmeldung: 21.06.2006
(73) Patentinhaber: Albert Handtmann Maschinenfabrik GmbH & Co. KG, 88400 Biberach (DE)
(72) Erfinder: Schliesser, Markus, 88489 Wain (DE); Reutter, Siegfried, 88436 Eberhardzell (DE); Müller, Franz, 88436 Eberhardzell-Ampfelbronn (DE); Bächtle, Manfred, 88433 Schemmerhofen (DE)
(74) Vertreter: Grünecker, Kinkeldey, Stockmair & Schwanhäusser Anwaltssozietät

(56) Entgegenhaltungen:
- DE-A1- 3 911 983
- DE-A1- 10 109 000
- FR-A- 2 725 877
- FR-A- 2 748 634
- US-A- 5 145 451
- US-A- 5 709 600

## Beschreibung

Die Erfindung betrifft eine Formvorrichtung sowie ein Verfahren zum Formen abgerundeter Kuppen an Wurstenden.

Eine solche Vorrichtung ist beispielsweise bereits aus der US 5,709,600 bekannt. Diese Druckschrift zeigt eine Abtrenneinrichtung, bei der sich zwei Verdrängerpakete aufeinander zu bewegen, so dass sich dazwischen eine Öffnung in Transportrichtung bzw. entgegen der Transportrichtung erweitert. Dabei werden die Verdrängerpakete so aufeinander zu bewegt, dass senkrecht zur Transportrichtung von oben ein Schneidemesser eingebracht werden kann.

Aus der Druckschrift DE 39 11 983 ist eine Vorrichtung zum Abteilen von Packungen eines gefüllten Schlauchs bekannt, wobei zwei Scherenarmpaare aufeinander zubewegt werden und nach dem Einschwenken abwechselnd positioniert sind und schließlich axial zueinander verschoben werden.

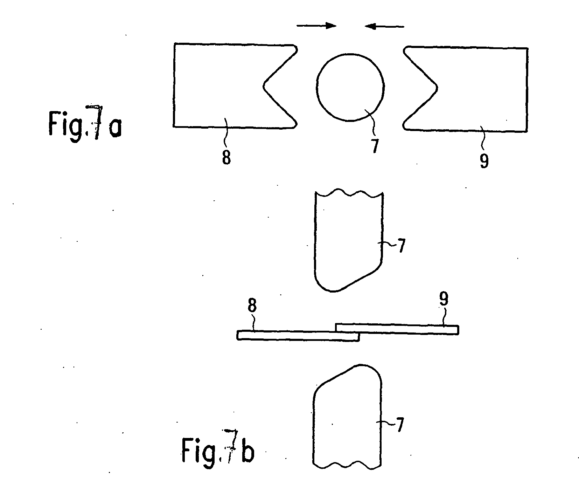

Vorrichtungen zum Trennen eines kontinuierlich erzeugten Wurststranges sind beispielsweise bereits aus der WO 03030646 bekannt. Bei den bekannten Verfahren wird der Strang durch Einschnüren mit z.B. zwei stabförmigen Verdrängerelementen, wie in Figuren 7a und 7b gezeigt ist, getrennt. Dabei bewegen sich die Verdrängerelemente 8, 9 aufeinander zu und überschneiden sich und scheren somit den Wurststrang 7 ab. Nachteilig dabei ist, dass keine gleichmäßige Abstützung beim Verdrängen, d.h. beim Einschnüren der Wurst erfolgt, vor allem dann, wenn noch gleichzeitig getrennt wird. Es kommt somit zu einem schrägen Abquetschen der Abteilstelle, wie aus Figur 7b hervorgeht. Durch die Verdrängerschere wird ein Wurstende erzeugt, das auf der der Verdrängerschere abgewandten Seite unförmig ist und nicht durch die Wursthülle verschlossen ist. Für nachfolgende Prozesse, wie beispielsweise Rauchen oder Braten ist dies nachteilig, da an dieser Stelle Brät austreten kann. Die o.g. Probleme treten insbesondere bei relativ weichen Wursthüllen auf, wie z.B. Wursthüllen, die während der Wurstproduktion koextrudiert werden und beim Einschnüren und Trennen noch nicht vollständig verfestigt sind. Ein derartiges Koextrudierverfahren ist beispielsweise aus der EP 1 371 293 bekannt.

Hiervon ausgehend liegt der vorliegenden Erfindung die Aufgabe zugrunde, eine verbesserte Vorrichtung sowie ein Verfahren bereitzustellen, das ermöglicht, einen kontinuierlich erzeugten Wurststrang einzuschnüren und/oder abzutrennen, wobei gleichzeitig eine abgerundete Kuppe an den Wurstenden entsteht.

Erfindungsgemäß wird diese Aufgabe durch die Merkmale der Ansprüche 1 und 10 gelöst.

Die erfindungsgemäße Formvorrichtung sowie das erfindungsgemäße Verfahren ermöglichen eine gleichmäßige Kuppenausbildung an den Wurstenden. Dadurch, dass die Verdrängerpakete in einer Einschnür- und/oder Abtrennposition zwei Öffnungsbereiche ausbilden, die sich in Transportrichtung bzw. entgegen der Transportrichtung erweitern und in denen die Wurstenden zu liegen kommen, wird der Wurststrang beim Einschnüren und Abtrennen an seinen Enden besser umschlossen. Somit kann während des Ein schnürens und/oder Abtrennens das Wurstende kuppenförmig geformt werden. Es kommt damit nicht zu einem unförmigen oder schiefen Abquetschen. Dies ist insbesondere bei weichen Wursthüllen, wie beispielsweise koextrudierten Wursthüllen, die beim Einschnüren und Trennen noch nicht vollständig verfestigt sind, von Vorteil.

Gemäß der Erfindung weisen die Verdrängerpakete jeweils mehrere nebeneinander stehende Verdrängerelemente auf. Diese Verdrängerelemente können als flache Platten, insbesondere als flache Verdrängerbleche ausgebildet sein. Die Verwendung von mehreren nebeneinander stehenden flachen Platten für die Verdrängerpakete erlaubt eine einfache und kostengünstige Fertigung der Formvorrichtung, da die Platten in einfacher Art und Weise mit einem entsprechenden Profil versehen werden können und dann derart zusammengesetzt werden können, dass sie eine bestimmte Form für die zwei Öffnungsbereiche aufweisen, so dass eine gewünschte abgerundete Kuppenform am Wurstende erzielt werden kann. Durch den mehrschichtigen Aufbau kann darüber hinaus das Gewicht der Verdrängerpakete reduziert werden.

Die Verdrängerpakete sind derart zueinander ausgerichtet sind, dass die jeweiligen Verdrängerelemente versetzt zueinander angeordnet sind, so dass die jeweiligen Verdrängerelemente ineinander greifen können, wenn sie aufeinander zu bewegt werden. Durch diese Anordnung ist es möglich, dass der kontinuierlich erzeugte Wurststrang mit einem Werkzeug einerseits eingeschnürt und abgestützt, andererseits aber auch abgetrennt werden kann.

Gemäß einem bevorzugten Ausführungsbeispiel weisen die Verdrängerelemente an ihrem Vorderende jeweils ein scherenförmiges Seiten profil auf. Ein scherenförmiges Seitenprofil weist eine Öffnung auf, die an einem hintersten Punkt beginnt und sich zunehmend erweitert, so dass oben und unten am Ende des Verdrängerelementes eine entsprechende Verdrängerspitze entsteht. Ein derartiges scherenförmiges Profil kann beispielsweise V-förmig, C-förmig etc. sein.

Gemäß einer bevorzugten Ausführungsform sind die Verdrängerelemente in einem Verdrängerpaket verstellbar zueinander angeordnet. Somit kann die Anordnung der Verdrängerelemente in einem Verdrängerpaket an unterschiedliche Anforderungen, wie beispielsweise unterschiedliche Wursthüllendurchmesser, Kaliber, Wursthüllen angepasst werden.

Die Verdrängerelemente eines Verdrängerpakets können so zueinander ausgerichtet sein, dass die Verdrängerelemente umso weiter nach vorne in Richtung des gegenüberliegenden Verdrängerpakets ragen je näher sie zur Mittelachse angeordnet sind. Durch diese Anordnung können in einfacher Weise Öffnungsbereiche erzeugt werden, die sich senkrecht zur Transportrichtung des gefüllten Wurststranges erweitern.

Vorzugsweise umfasst ein Verdrängerpaket mindestens drei vorzugsweise mindestens fünf Verdrängerelemente. Eine gleichmäßige Kuppenform ist durch Schichten mehrerer dünner Verdrängerelemente besser herzustellen als durch weniger dicke Verdrängerelemente.

In vorteilhafter Weise ist die erfindungsgemäße Formvorrichtung einerseits zum Einschnüren aber auch zum Abtrennen geeignet. Zum Einschnüren des Wurststrangs werden die Verdrängerelemente so weit aufeinander zu bewegt, dass die scherenförmigen Profile nur teilweise überlappen, so dass zwischen den scherenförmigen Profilen eine durchgehende Öffnung verbleibt, d.h., dass die beiden Öffnungsbereiche miteinander verbunden sind. Das bedeutet, dass der gefüllte Wurststrang zwar eingeschnürt, d.h., das pastöse Gut in dem Wurststrang verdrängt wird und der Wurststrang somit derart geformt wird, dass sich kuppenförmige abgerundete Enden bilden, der Wurststrang jedoch nicht durch die Verdrängerelemente abgetrennt wird.

Die gleiche Vorrichtung eignet sich jedoch auch zum Abtrennen des gefüllten Wurststrangs und zwar dann, wenn die Verdrängerpakete weiter aufeinander zu bewegt werden. Zum Abtrennen des gefüllten Wurststrangs werden die Verdrängerelemente der Verdrängerpakete so weit aufeinander zu bewegt und greifen so ineinander, dass die scherenförmigen Profile der Verdrängerelemente in der Mitte der Verdrängerpakete ganz überlappen, so dass keine durchgehende Öffnung mehr zwischen den scherenförmigen Profilen bleibt, während die scherenförmigen Seitenprofile der äußeren Verdrängerelemente nur teilweise überlappen, so dass die entsprechenden Öffnungsbereiche zwischen den Profilen verbleiben. Somit kann der gefüllte Wurststrang durch die Verdrängerelemente in der Mitte der Verdrängerpakete abgetrennt werden und von den weiter außen liegenden Verdrängerelementen die Öffnungsbereiche bilden, in denen die Wurstenden liegen, kuppenförmig geformt werden. Somit kann mit ein und derselben Vorrichtung in Abhängigkeit des Ausmaßes der Bewegung der Verdrängerpakete entweder eingeschnürt oder abgetrennt werden. Würden zum Abtrennen alle Verdrängerelemente mit Überschneidung geschlossen, so könnte die Wursthülle und das Brät in der Mitte der Abteilstelle nicht entweichen und würde regelrecht ausgestanzt werden.

Die Formvorrichtung gemäß der vorliegenden Erfindung kann weiter eine Einrichtung umfassen, die die Verdrängerpakete entweder senkrecht zur Transportrichtung des gefüllten Wurststranges aufeinander zu bewegt oder die Verdrängerpakete entlang einer Kurve aufeinander zu bewegt. Wenn die Verdrängerpakete zum Verdrängen senkrecht zur Transportrichtung des gefüllten Wurststrangs hin bewegt werden, kann der Transport des Wurststrangs kurzzeitig gestoppt werden. Wenn die Verdrängerpakete auf einer Kurvenbahn aufeinander zu bewegt werden, so kann der Wurststrang während des Einschnürens und/oder Abtrennens weiter bewegt werden.

Die vorliegende Erfindung wird nachfolgend unter Bezugnahme der folgenden Figuren näher erläutert werden.
- Figur 1: ist eine schematische Seitenansicht der vorliegenden Erfindung,
- Figur 2: ist eine perspektivische Darstellung einer Formvorrichtung gemäß einem Ausführungsbeispiel der vorliegenden Erfindung in geöffneter Position,
- Figur 3: ist eine schematische Seitenansicht der in Figur 2 gezeigten Formvorrichtung in einer Abtrennposition,
- Figur 4: ist eine Seitenansicht der in Figur 2 gezeigten Formvorrichtung,
- Figur 5: ist eine Draufsicht auf die in Figur 2 gezeigte Formvorrichtung,
- Figur 6a: zeigt einen Querschnitt einer Formvorrichtung gemäß der vorliegenden Erfindung zum Einschnüren eines Wurststrangs gemäß einem bevorzugten Ausführungsbeispiel der vorliegenden Erfindung,
- Figur 6b: zeigt eine Seitenansicht des in Figur 6a gezeigten Verdrängerpakets,
- Figuren 7a, 7b: zeigen eine Vorrichtung zum Abtrennen eines Wurststrangs gemäß dem Stand der Technik.

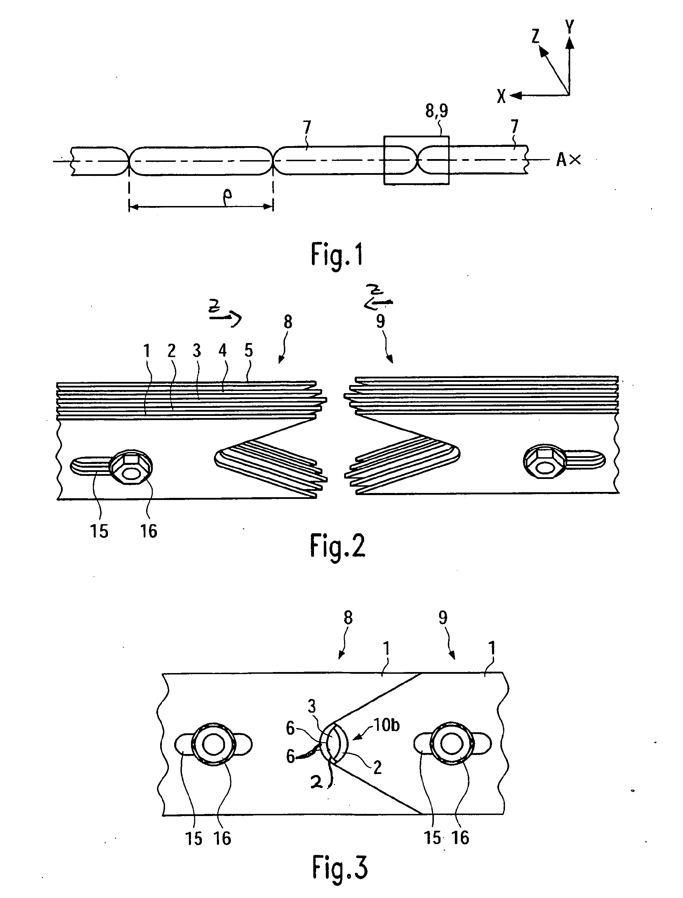

Figur 1 zeigt den schematischen Aufbau der erfindungsgemäßen Vorrichtung zum Formen von abgerundeten Kuppen an Wurstenden. Die Figur 1 zeigt einen kontinuierlich erzeugten Wurststrang, der beispielsweise von einem Füller, der pastöses Gut in eine Wursthülle einbringt, gefüllt wird. Besonders vorteilhaft kann die erfindungsgemäße Formvorrichtung eingesetzt werden, wenn der gefüllte Wurststrang 7 durch eine Koextrudiervorrichtung hergestellt wurde, wobei die Wursthülle während der Wurstproduktion koextrudiert wird und beim Einschnüren und Trennen noch nicht vollständig verfestigt ist und somit relativ weich ist. Der so erzeugte Wurststrang 7 wird dann von der Formvorrichtung 8, 9 entweder nur eingeschnürt, um den Wurststrang in Einzelportionen zu unterteilen oder aber in Einzelportionen getrennt.

Gemäß der vorliegenden Erfindung wird beim Einschnüren und/oder Abtrennen eine abgerundete Kuppe an den Wurstenden erzeugt. Dabei sind die Vorrichtungen zum Einschnüren und zur Formgebung in einer Einheit 8, 9 realisiert.

Figur 2 zeigt in perspektivischer Darstellung ein Ausführungsbeispiel der vorliegenden Erfindung. Die erfindungsgemäße Formvorrichtung zum Formen von abgerundeten Kuppen umfasst gemäß Fig. 3 zwei gegenüberliegende Verdrängerpakete 8, 9, die wie durch die Pfeile Z dargestellt ist, durch eine nicht dargestellte Einrichtung aufeinander zu bewegt werden können. Hier umfasst ein Verdrängerpaket 8, 9 mehrere nebeneinander stehende Verdrängerelemente 1 bis 5. In diesem Ausführungsbeispiel sind die Verdrängerelemente als flache Platten, hier Verdrängerbleche, ausgebildet. Die Verdrängerelemente 1 bis 5 sind beispielsweise aus Stahl gefertigt. Die Verdrängerelemente 1 bis 5 sind hier verstellbar zueinander angeordnet. Insbesondere sind die einzelnen Verdrängerelemente über ein Langloch 15 mit einer entsprechenden Schraube 16 zusammengefügt, so dass sich die Verdrängerelemente 1 bis 5 in Z-Richtung verschieben lassen.

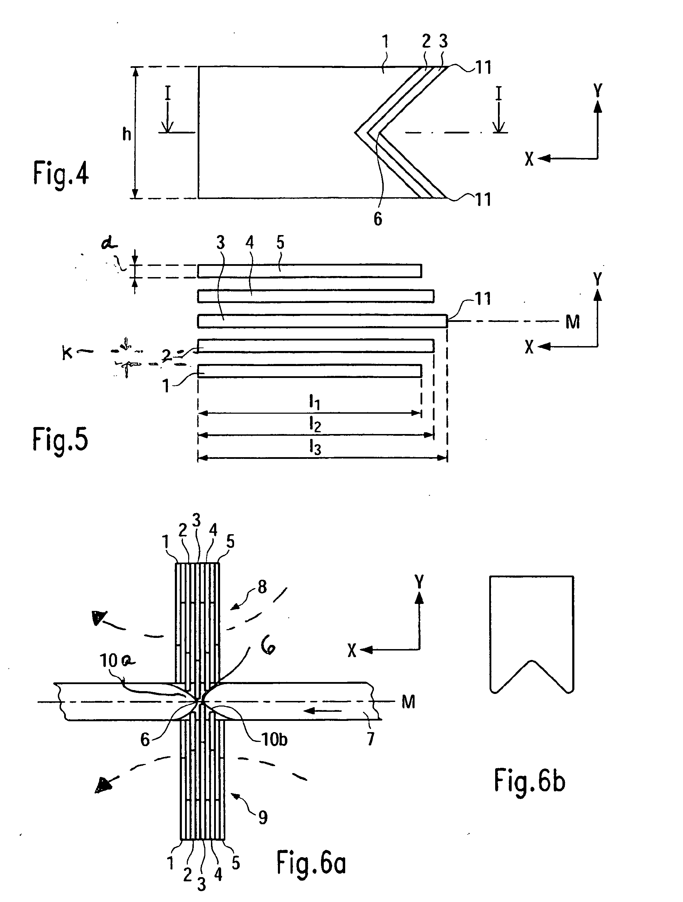

Wie ebenfalls aus Figuren 4 und 5 ersichtlich ist, weisen die einzelnen Verdrängerelemente 1 bis 5 ein scherenförmiges Seitenprofil auf. Das scherenförmige Seitenprofil weist einen hintersten Punkt 6 auf, von dem aus sich die Profilöffnung nach vorne, d.h. in Z-Richtung, erweitert, so dass an der oberen und unteren Seite zwei Verdrängerspitzen. 11 entstehen. In diesem Ausführungsbeispiel ist das scherenförmige Seitenprofil V-förmig ausgebildet. Das scherenförmige Seitenprofil kann jedoch auch C-förmig gestuft etc. ausgebildet sein, so lange sich die Profilöffnung von einem hintersten Punkt 6 aus nach oben und unten erweitert. Die Verdrängerelemente 1 bis 5 sind hier derart angeordnet, dass das Verdrängerelement 3, das sich in der Mitte M des Verdrängerpakets 8, 9 befindet am weitesten nach vorne, d.h. hier in Z-Richtung, zum gegenüberliegenden Verdrängerpaket 8, 9 hin erstreckt. Während die äußersten Verdrängerelemente 1, 5 eine Strecke L₁< L₂ nach vorne ragen, ragen die Verdrängerelemente 2, 4, die näher an der Mittelachse M liegen, eine Strecke L₂ in Z-Richtung, während das mittlere Verdrängerelement 3 um eine Strecke L₃ > L₂ mit seiner Spitze 11 nach vorne ragt. Die Abstände können zueinander eingestellt werden. Vorzugsweise beträgt die Differenz zwischen L₃ und L₂ ca. 1-5 mm, ebenso zwischen L₂ und L₁.

Die Stärke d eines Verdrängerelements 1 bis 5 liegt in einem Bereich von 0,5 mm bis 3 mm. Der Abstand k zwischen zwei Verdrängerelementen ist ca. 0,1mm bis 1 mm größer als die Stärke d, derart, dass die Verdrängerelemente 1 bis 5 gegenüberliegender Verdrängerpakete ineinander greifen können. Die Seitenflächen der Verdrängerelemente 1, 2, 4 und 5 berühren sich vorzugsweise beim Ineinandergreifen nicht, während sich die Seitenflächen des mittleren Verdrängerelements 3 vorzugsweise berühren, vor allem, wenn die Portionen getrennt werden sollen.. Die Höhe eines Verdrängerelements liegt im Bereich von 15 mm bis 45 mm. Die Höhe h der Verdrängerelemente ist abhängig vom Durchmesser des Wurststrangs, wobei mit größerer Höhe auch Wurststränge mit kleinerem Durchmesser verarbeitet werden können. Bei diesem Ausführungsbeispiel werden je fünf Verdrängerelemente verwendet. Eine gleichmäßige Kuppenform ist durch Schichten mehrerer dünner Verdrängerelemente besser herzustellen als durch Schichten weniger dicker Verdrängerelemente.

Die Verdrängerpakete 8, 9 sind derart angeordnet, dass sie, wie aus Figur 2 hervorgeht und wie auch beispielsweise aus der Figur 6 deutlich wird, ineinander eingreifen können, wenn sie aufeinander in Z-Richtung zu bewegt werden. Beim Aufeinanderzubewegen bilden sich aufgrund des scherenförmigen Profils sowie aufgrund der versetzten Anordnung der Verdrängerelemente 1 bis 5 (s. Figuren 4 und 5) zwischen den Verdrängerpaketen Öffnungsbereiche 10a, b (s. auch Figur 6a). Der Öffnungsbereich 10a erstreckt sich in Transportrichtung, d.h. in X-Richtung, während sich der zweite Öffnungsbereich 10b entgegen der Transportrichtung erstreckt. Die Öffnungsbereiche 10a, 10b erweitern sich in Transportrichtung bzw. entgegen der Transportrichtung, wobei die Öffnungsbereiche durch die Profilkanten der Verdrängerelemente begrenzt sind und die Wurstenden des Wurststranges 7 beim Einschnüren in den Öffnungsbereichen 10a, b, wie in Figur 6a gezeigt ist, zu liegen kommen. Die Abmessungen der Öffnungsbereiche 10a, b nehmen von der Mittelachse M des Wurststrangs senkrecht zur Transportrichtung zu und zwar in Z-Richtung aufgrund der versetzten Verdrängerelemente 1 bis 5 und in Y-Richtung aufgrund des scherenförmigen Profils. Das bedeutet, dass sich die Öffnungsbereiche im Wesentlichen trichterartig erweitern (Fig. 3).

Die zuvor beschriebene Formvorrichtung kann zum Abtrennen sowie zum Einschnüren verwendet werden.

Nachfolgend soll zunächst die Verwendung der Formvorrichtung zum Trennen erläutert werden. Die erfindungsgemäße zuvor beschriebene Formvorrichtung 8, 9 wird derart, wie aus den Figuren 1 und 3 hervorgeht, angeordnet, dass ein kontinuierlich erzeugter mit pastösem Gut gefüllter Wurststrang abgetrennt werden kann. Dabei sind die gegenüberliegenden Verdrängerpakete 8, 9 in Z-Richtung, d.h., senkrecht zur Transportrichtung X angeordnet, so dass der gefüllte Wurststrang 7 in Transportrichtung X zwischen den Verdrängerpaketen 8, 9 mit Hilfe einer nicht dargestellten Transporteinrichtung, wie beispielsweise einem Förderband, einer Längeneinheit, etc. hindurch bewegt werden kann. Nachdem der Wurststrang 7 um eine Strecke p in Transportrichtung X gefördert wurde, wobei p im Wesentlichen der Wurstlänge entspricht, werden die gegenüberliegenden Verdrängerpakete 8, 9 aufeinander zu bewegt, um den gefüllten Wurststrang einzuschnüren und abzutrennen.

Beim Aufeinanderzubewegen der Verdrängerpakete 8, 9 greifen die einzelnen Verdrängerelemente 1 bis 5 ineinander ein, wie aus Fig. 3 hervorgeht. Die Verdrängerelemente 1 bis 5 der gegenüberliegenden Verdrängerelemente 8, 9 werden so weit aufeinander zu bewegt und greifen so weit ineinander ein, dass die scherenförmigen Profile der Verdrängerelemente 3, die in der Mitte M der jeweiligen Verdrängerpakete liegen, ganz überlappen, so dass keine durchgehende Öffnung mehr zwischen den scherenförmigen Profilen dieser Verdrängerelemente 3 bleibt. Die einander zu gewandten Flächen der Verdrängerelemente 3 berühren sich dabei und durchtrennen den Wurststrang. Die scherenförmigen Seitenprofile der äußeren Verdrängerelemente 1, 2, 4, 5 überlappen nur teilweise, so dass die entsprechenden Öffnungsbereiche 10a, b zwischen den Profilen verbleiben, wie aus Figur 3 hervorgeht. In Figur 3 ist zu sehen, dass sich die Profile der mittleren Verdrängerelemente 3 ganz überschneiden und die Verdrängerelemente 2 und 1 nur teilweise überschneiden, so dass in Figur 3 der Öffnungsbereich 10b entsteht und auf der gegenüberliegenden Seite in Transportrichtung der Öffnungsbereich 10a. Wie zuvor beschrieben, erweitert sich der jeweilige Öffnungsbereich 10a, b im Wesentlichen trichterartig stufenförmig. Wenn sich die Verdrängerpakete 8, 9 so aufeinander zu bewegen, wird, wie zuvor beschrieben, der Wurststrang durch die Verdrängerelemente in der Mitte 3 durchtrennt, während sich die Wurstenden nachfolgender Portionen gleichzeitig in den Öffnungsbereiche 10a, b befinden und somit als abgerundete Kuppe ausgebildet werden können. Dadurch, dass nur die Profile der mittleren Verdrängerelemente 3 ganz überlappen, ist ein glatter Schnitt möglich. Würden alle Verdrängerelemente mit Überschneidung geschlossen, so könnte die Wursthülle und das Brät in der Mitte der Abteilstelle nicht entweichen und würde regelrecht ausgestanzt werden.

Im Anschluss bewegen sich dann die Verdrängerpakete 8, 9 wieder auseinander und der Wurststrang 7 wird um eine Strecke p weiter befördert, wonach sich die Verdrängerpakete 8, 9 wieder, wie zuvor beschrieben, aufeinander zu bewegen, um den gefüllten Wurststrang 7 zu unterteilen und abzutrennen.

Die zuvor erläuterte Formvorrichtung eignet sich in gleicher Weise auch zum Einschnüren des Wurststrangs, ohne dass dieser getrennt wird. Dabei wird die gleiche Vorrichtung verwendet und die einzelnen Verfahrensschritte sind die gleichen die zuvor beschrieben wurden, jedoch werden die beiden Verdrängerpakete 8, 9 weniger weit aufeinander zu bewegt, so dass auch die Verdrängerelemente 3 in der Mitte der entsprechenden Verdrängerpakete 8, 9 nicht vollständig überlappen, so dass der gefüllte Wurststrang nicht durchtrennt wird. Wie beispielsweise aus Figur 6a hervorgeht, die einen Querschnitt z.B. entlang der Linie II in Figur 4 durch die Formvorrichtung zeigt, sind in einer Einschnürposition die Verdrängerelemente 1 bis 5 so weit aufeinander zu bewegt, dass die scherenförmigen Profile nur teilweise überlappen, so dass zwischen den scherenförmigen Profilen eine durchgehende Öffnung verbleibt, so dass die beiden Öffnungsbereiche 10a, b miteinander verbunden sind. Aus der Figur 6a geht hervor, dass der hinterste Punkt 6 des scherenartigen Profils selbst im Mittelbereich von dem hintersten Punkt 6 des gegenüberliegenden Verdrängerelements 3 beabstandet ist. Durch die versetzte Anordnung der Verdrängerelemente sowie das scherenförmige Seitenprofil ergibt sich, wie zuvor beschrieben, jeweils ein Öffnungsbereich 10a oder 10b, dessen Abmessung in Z- bzw. Y-Richtung sich von der Mittelachse M aus in Transportrichtung bzw. entgegengesetzt dazu erweitert. Beim Einschnüren liegt der Wurststrang in diesen Öffnungsbereichen und kann somit eine abgerundete Kuppenform annehmen.

Es ist auch möglich, dass, wie zuvor beschrieben, die Verdrängerpakete den gefüllten Wurststrang einschnüren, der Wurststrang jedoch dann von einem in der Mitte befindlichen Messer oder Ähnlichem durchtrennt wird.

Bei dem erfindungsgemäßen Verfahren können die beiden Verdrängerelemente über eine entsprechende Einrichtung senkrecht zur Transportrichtung, d.h., in Z-Richtung, aufeinander zu bewegt werden. Dabei kann der Transport des gefüllten Wurststrangs kurzzeitig unterbrochen werden, bis der Einschnür- bzw. Abtrennvorgang vollendet ist, wonach der Wurststrang wieder um eine Strecke p, wie zuvor beschrieben, weiter bewegt wird.

Um einen kontinuierlichen Betrieb zu gewährleisten, können die beiden Verdrängerpakete 8, 9 auch entlang einer Kurve, wie aus Figur 6a hervorgeht, zueinander bewegt werden. Dies bringt den Vorteil mit sich, dass sich die Verdrängerpakete 8, 9 während des Einschnürens bzw. während des Abtrennens in Transportrichtung X mit bewegen, so dass die Relativgeschwindigkeit zwischen Verdrängerpaketen und Wurststrang relativ gering, möglichst Null ist. Somit kann der Wurststrang eingeschnürt bzw. abgetrennt werden, ohne dass der Transport des Wurststrangs 7 gestoppt wird. Die Geschwindigkeit der Verdrängerpakete wird dabei so festgelegt, dass die Zeit, die die Verdrängerpakete benötigen, um wieder an ihren Ausgangspunkt zurückzukehren, der Zeit entspricht, in der die Wursthülle 7 um eine Strecke p bewegt wird, so dass die Einzelportion eine korrekte Länge aufweist. Auch die Bewegung entlang einer Kurve, wie in Figur 6a gezeigt, wird so festgelegt, dass sich die Verdrängerpakete 8, 9 nach einer bestimmten Zeit wieder in der Einschnür- bzw. Abtrennposition befinden, die der Zeit entspricht, die benötigt wird, um den Wurststrang 7 um die Strecke p zu befördern. Die Einrichtung zur Bewegung der Verdrängerpakete kann dabei beispielsweise einen Antrieb umfassen, der derart ausgebildet ist, dass die Verdrängerpakete 8, 9 um eine Achse, die sich in Y-Richtung, d.h., senkrecht zur Transportrichtung, erstreckt, umlaufen. Die Führung der Verdrängerpakete entlang einer Kurve kann aber auch über gängige Mittel wie einer Kulissenführung etc. realisiert werden.

Die vorliegende Erfindung wurde hier anhand eines Beispiels einer Formvorrichtung verdeutlicht, die mehrere nebeneinander stehende Verdrängerelemente aufweist. Es ist jedoch auch möglich, die Verdrängerpakete massiv auszubilden, solange in einer Einschnürposition, d.h. in einer Position in der die beiden Verdrängerpakete aufeinander zu bewegt sind, sich zur Erzeugung der abgerundeten Kappen entsprechende Öffnungsbereiche in Transportrichtung bzw. entgegen der Transportrichtung ausbilden, die sich jeweils erweitern

## Patentansprüche

1. Formvorrichtung zum Formen von abgerundeten Kuppen an Wurstenden und zum Einschnüren und/oder Abtrennen eines kontinuierlich erzeugten mit pastösem Gut befüllten Wurststranges (7) in Einzelportionen, mit
zwei gegenüberliegenden aufeinander zu beweglichen Verdrängerpaketen (8, 9), zwischen denen der gefüllte Wurststrang (7) in Transportrichtung bewegbar ist,
wobei die Verdrängerpakete (8,9) derart ausgebildet sind , dass sich in einer Einschnür- und/oder Abtrennposition zwischen den beiden Verdrängerpaketen (8,9) zwei Öffnungsbereiche (10a, b) ausbilden , die sich in Transportrichtung b.z.w. entgegen der Transportrichtung erweitern, **dadurch gekennzeichnet, dass** die Verdrängerpakete (8) jeweils mehrere nebeneinander stehende flache Verdrängerelemente (1 bis 5) umfassen und die Verdrängerpakete (8, 9) derart zueinander ausgerichtet sind, dass die jeweiligen Verdrängerelemente (1 bis 5) derart versetzt zueinander angeordnet sind, dass die jeweiligen Verdrängerelemente (1 bis 5) ineinander greifen können, wenn sie aufeinander zu bewegt werden.

2. Formvorrichtung nach Anspruch 1,
**dadurch gekennzeichnet, dass**
die Verdrängerelemente (1 bis 5) als flache Platten, insbesondere als flache Verdrängerbleche (1 bis 5) ausgebildet sind.

3. Formvorrichtung nach einem der Ansprüche 1 oder 2,
**dadurch gekennzeichnet, dass**
die Verdrängerelemente (1 bis 5) an ihrem Vorderende jeweils ein scherenförmiges Seitenprofil aufweisen.

4. Formvorrichtung nach mindestens einem der Ansprüche 1 bis 3,
**dadurch gekennzeichnet, dass**
die Verdrängerelemente (1 bis 5) in einem Verdrängerpaket (8, 9) verstellbar zueinander angeordnet sind.

5. Formvorrichtung nach mindestens einem der Ansprüche 1 bis 4,
**dadurch gekennzeichnet, dass**
die Verdrängerelemente (1 bis 5) eines Verdrängerpakets (9) so zueinander ausgerichtet sind, dass die Verdrängerelemente (1 bis 5) umso weiter nach vorne in Richtung des gegenüberliegenden Verdrängerpakets (9) ragen, je näher sie zur Mittelachse (M) des Verdrängerpakets (8) angeordnet sind.

6. Formvorrichtung nach mindestens einem der Ansprüche 1 bis 5,
**dadurch gekennzeichnet, dass**
ein Verdrängerpaket (8) mindestens drei, vorzugsweise mindestens fünf Verdrängerelemente (1 bis 5) aufweist.

7. Formvorrichtung nach Anspruch 3,
**dadurch gekennzeichnet, dass**
zum Einschnüren des Wurststrangs (7) die Verdrängerelemente (1 bis 5) soweit aufeinander zu bewegt sind, dass die scherenförmigen Profile (6, 11) nur teilweise überlappen, so dass zwischen den scherenförmigen Profilen (6, 11) eine durchgehende Öffnung (10a, b) verbleibt, so dass die beiden Öffnungsbereiche (10a, b) miteinander verbunden sind.

8. Formvorrichtung nach Anspruch 3,
**dadurch gekennzeichnet, dass**
zum Abtrennen des gefüllten Wurststranges (7) die Verdrängerelemente (1 bis 5) der Verdrängerpakete (8, 9) soweit aufeinander zu bewegt werden und ineinander greifen, dass die scherenförmigen Profile der Verdrängerelemente in der Mitte (M) der Verdrängerpakete ganz überlappen, so dass keine durchgehende Öffnung mehr zwischen den scherenförmigen Profilen bleibt, während die scherenförmigen Seitenprofile (6, 11) der äußeren Verdrängerelemente (1, 2) nur teilweise überlappen, so dass die entsprechenden Öffnungsbereiche (10a, b) zwischen den Profilen verbleiben.

9. Formvorrichtung nach mindestens einem der Ansprüche 1 bis 8,
**dadurch gekennzeichnet, dass**
die Vorrichtung weiter eine Einrichtung umfasst, die die Verdrängerpakete (8, 9) senkrecht zur Transportrichtung des gefüllten Wurststranges (7) aufeinander zu bewegt oder die Verdrängerpakete entlang einer Kurve aufeinander zu bewegt.

10. Verfahren zum Formen abgerundeter Kuppen an Wurstenden und zum Unterteilen und/oder Abtrennen eines kontinuierlich erzeugten mit pastösem Gut befüllten Wurststranges mit einer Formvorrichtung nach mindestens einem der Ansprüche 1 bis 9 mit folgenden Schritten:
- Transportieren eines gefüllten Wurststranges (7) zwischen den zwei gegenüber liegenden Verdrängerpaketen (8, 9),
- aufeinander zu bewegen der Verdrängerpakete (8, 9) und Verdrängen des pastösen Gutes, wobei versetzt zueinander angeordnete flache Verdrängerelemente (1 bis 5) der Verdrängerpakete (8, 9) derart ineinander greifen, dass zwischen den beiden Verdrängerpaketen (8, 9) zwei Öffnungsbereiche (10a, b) entstehen, die sich in Transportrichtung bzw. entgegen der Transportrichtung erweitern, worin jeweils eine abgerundete Kuppe an den Wurstenden erzeugt wird.

11. Verfahren nach Anspruch 10,
**dadurch gekennzeichnet, dass**
nach dem Verdrängen der gefüllte Wurststrang entweder noch zusammen hängt, wobei das pastöse Gut nur verdrängt wird, oder die Wursthülle zur Erzeugung von Einzelportionen durchtrennt wird.

12. Verfahren nach einem der Ansprüche 10 oder 11,
**dadurch gekennzeichnet, dass**
zum Einschnüren des Wurststranges (7) die Verdrängerelemente (1 bis 5) soweit aufeinander zu bewegt werden und soweit ineinander greifen, dass scherenförmige Profile an den Vorderenden der Verdrängerelemente teilweise überlappen, so dass zwischen den scherenförmigen Profilen eine durchgehende Öffnung (10a, b) verbleibt.

13. Verfahren nach einem der Ansprüche 10 bis 12,
**dadurch gekennzeichnet, dass**
zum Abtrennen des gefüllten Wurststranges (7) die Verdrängerelemente (1 bis 5) der jeweiligen Verdrängerpakete (8, 9) soweit aufeinander zu bewegt werden, dass die scherenförmigen Profile (3) in der Mitte (M) der Verdrängerpakete (8, 9) ganz überlappen, so dass keine Öffnung mehr zwischen den Profilen bleibt, während die scherenförmigen Seitenprofile der äußeren Verdrängerelemente (1, 2) nur teilweise überlappen, so dass die entsprechenden Öffnungsbereiche (10a, b) zwischen den Profilen verbleiben.

14. Verfahren nach mindestens einem der Ansprüche 10 bis 13,
**dadurch gekennzeichnet, dass**
sich die Verdrängerelemente (1 bis 5) der Verdrängerpakete (8, 9) zum Verdrängen senkrecht zur Transportrichtung des gefüllten Wurststranges hin bewegen, während der Transport des Wurststranges kurzzeitig gestoppt wird.

15. Verfahren nach einem der Ansprüche 10 bis 14,
**dadurch gekennzeichnet, dass**
die Verdrängerpakete (8, 9) auf einer Kurvenbahn aufeinander zu bewegt werden, so dass die Verdrängerpakete während des Einschnürens und/oder Abtrennens in Transportrichtung des Wurststrangs bewegt werden.

## Claims

1. A shaping device for forming rounded tips on the ends of sausages and for tying off and / or parting a continuously produced sausage skein (7) filled with paste material into single portions, comprising
two oppositely located displacement assemblies (8, 9), which move towards one another and between which the filled sausage skein (7) can be moved in the transport direction,
wherein the displacement assemblies (8, 9) are formed such that two opening sections (10a, b), which widen out in the transport direction, respectively opposite to the transport direction, are formed in a tying off and / or parting position between the two displacement assemblies (8, 9), **characterised in that** the displacement assemblies (8, 9) each comprise a plurality of adjacently located flat displacement elements (1 to 5), and the displacement assemblies (8, 9) are aligned with respect to one another such that the respective displacement elements (1 to 5) are arranged offset to one another such that the respective displacement elements (1 to 5) can engage in one another when they are moved towards one another.

2. The shaping device according to Claim 1,
**characterised in that**
the displacement elements (1 to 5) are formed as flat plates, in particular as flat displacement sheets (1 to 5).

3. The shaping device according to one of the Claims 1 to 2,
**characterised in that**
the displacement elements (1 to 5) each exhibit a scissors-shaped side profile at their front end.

4. The shaping device according to at least one of the Claims 1 to 3,
**characterised in that**
the displacement elements (1 to 5) are arranged in a displacement assembly (8, 9) to be adjustable with respect to one another.

5. The shaping device according to at least one of the Claims 1 to 4,
**characterised in that**
the displacement elements (1 to 5) of a displacement assembly (9) are aligned to one another such that the displacement elements (1 to 5) protrude further forwards in the direction of the opposing displacement assembly (9) the closer they are positioned to the central axis (M) of the displacement assembly (8).

6. The shaping device according to at least one of the Claims 1 to 5,
**characterised in that**
a displacement assembly (8) comprises at least three, preferably at least five displacement elements (1 to 5).

7. The shaping device according to Claim 3,
**characterised in that**
the displacement elements (1 to 5) are moved so far towards one another for tying off the sausage skein (7) such that the scissors-shaped profiles (6, 11) only partially overlap so that a passable opening (10a, b) remains between the scissors-shaped profiles (6, 11) so that both opening sections (10a, b) are connected to one another.

8. The shaping device according to Claim 3,
**characterised in that**
for parting the filled sausage skein (7) the displacement elements (1 to 5) of the displacement assemblies (8, 9) are moved close together and engage in one another such that the scissors-shaped profiles of the displacement elements completely overlap in the centre (M) of the displacement assemblies so that no passable opening now remains between the scissors-shaped profiles, whereas the scissors-shaped side profiles (6, 11) of the outer displacement elements (1, 2) only partially overlap so that the corresponding opening sections (10a, b) between the profiles remain.

9. The shaping device according to at least one of the Claims 1 to 8,
**characterised in that**
the device also comprises a mechanism which moves the displacement assemblies (8, 9) towards one another perpendicular to the transport direction of the filled sausage skein (7) or moves the displacement assemblies towards one another along a curve.

10. A method of shaping rounded tips on the ends of sausages and for dividing and / or parting a continuously produced sausage skein filled with paste material with a shaping device according to at least one of the Claims 1 to 9 with the following steps:
- transporting a filled sausage skein (7) between the two opposing displacement assemblies (8, 9),
- moving the displacement assemblies (8, 9) towards one another and displacing the paste material, wherein flat displacement elements (1 to 5) of the displacement assemblies (8, 9) arranged offset to one another engage in one another such that two opening sections (10a, b), which widen out in the transport direction, respectively opposite the transport direction, are formed between the two displacement assemblies (8, 9), wherein in each case a rounded tip is produced on the ends of the sausage.

11. The method according to Claim 10,
**characterised in that**
after displacement the filled sausage skein is either still linked together, wherein the paste material is only displaced or the sausage sleeve is parted to produce single portions.

12. The method according to one of the Claims 10 to 11,
**characterised in that**
for tying off the sausage skein (7) the displacement elements (1 to 5) are moved so far towards one another and engage so far with one another that the scissors-shaped profiles on the front ends of the displacement elements partly overlap, so that a passable opening (10a, b) remains between the scissors-shaped profiles.

13. The method according to one of the Claims 10 to 12,
**characterised in that**
for parting the filled sausage skein (7) the displacement elements (1 to 5) of the respective displacement assemblies (8, 9) are moved so far towards one another such that the scissors-shaped profiles (3) in the centre (M) of the displacement assemblies (8, 9) completely overlap so that no passable opening now remains between the profiles, whereas the scissors-shaped side profiles of the outer displacement elements (1, 2) only partially overlap so that the corresponding opening sections (10a, b) between the profiles remain.

14. The method according to at least one of the Claims 10 to 13,
**characterised in that**
the displacement elements (1 to 5) of the displacement assemblies (8, 9) for displacing move perpendicular to the transport direction of the filled sausage skein while the transport of the sausage skein is briefly stopped.

15. The method according to one of the Claims 10 to 14,
**characterised in that**
the displacement assemblies (8, 9) are moved towards one another on a curved path so that the displacement assemblies are moved in the transport direction of the sausage skein during tying off and / or parting.

## Revendications

1. Dispositif de moulage pour mouler des bouts arrondis aux extrémités de saucisses et pour étrangler et/ou séparer en portions individuelles un cordon de saucisse (7) produit de manière continue, rempli de masse pâteuse, comportant
deux paquets de repoussoirs (8; 9) en vis-à-vis l'un de l'autre, mobiles l'un vers l'autre, entre lesquels le cordon de saucisse (7) rempli peut être déplacé dans la direction de transport,
les paquets de repoussoirs (8, 9) étant réalisés de telle manière qu'il se forme, dans une position d'étranglement et/ou de séparation entre les deux paquets de repoussoirs (8, 9), deux zones d'ouverture (10a, b), qui s'élargissent dans la direction de transport ou à l'opposé de la direction de transport, **caractérisé en ce que** les paquets de repoussoirs (8) comprennent chacun plusieurs éléments repoussoirs (1 à 5) plats, juxtaposés les uns aux autres, et les paquets de repoussoirs (8, 9) sont ajustés de telle façon l'un par rapport à l'autre que les différents éléments repoussoirs (1 à 5) peuvent venir en prise les uns dans les autres, lorsqu'on les déplace les uns vers les autres.

2. Dispositif de moulage selon la revendication 1,
**caractérisé en ce que**
les éléments repoussoirs (1 à 5) sont réalisés sous forme de plaques plates, en particulier sous forme de tôles de repoussoirs (1 à 5) plates.

3. Dispositif de moulage selon l'une des revendications 1 ou 2,
**caractérisé en ce que**
les éléments repoussoirs (1 à 5) présentent chacun à leur extrémité avant un profil latéral en forme de ciseau.

4. Dispositif de moulage selon l'une au moins des revendication 1 à 3,
**caractérisé en ce que**
les éléments repoussoirs (1 à 5) sont disposés réglables l'un par rapport à l'autre dans un paquet de repoussoirs (8, 9).

5. Dispositif de moulage selon l'une au moins des revendications 1 à 4,
**caractérisé en ce que**
les éléments repoussoirs (1 à 5) d'un paquet de repoussoirs (9) sont ajustés les uns par rapport aux autres de telle façon que les éléments repoussoirs (1 à 5) sont d'autant plus avancés vers l'avant en direction du paquet de repoussoirs (9) opposé qu'ils sont proches de l'axe médian (M) du paquet de repoussoirs (8).

6. Dispositif de moulage selon l'une au moins des revendications 1 à 5,
**caractérisé en ce que**
un paquet de repoussoirs (8) comporte au moins trois, de préférence au moins cinq éléments repoussoirs (1 à 5).

7. Dispositif de moulage selon la revendication 3,
**caractérisé en ce que**
pour étrangler le cordon de saucisse (7), les éléments repoussoirs (1 à 5) sont déplacés les uns vers les autres, au point que les profils en forme de ciseaux (6, 11) ne se recouvrent que partiellement, de sorte qu'il demeure entre les profils en forme de ciseaux (6, 11) une ouverture traversante (10a, b), telle que les deux zones d'ouverture (10a, b) sont reliées l'une à l'autre.

8. Dispositif de moulage selon la revendication 3,
**caractérisé en ce que**
pour séparer le cordon de saucisse rempli (7), les éléments repoussoirs (1 à 5) des paquets de repoussoirs (8, 9) sont déplacés les uns vers les autres et viennent en prise les uns dans les autres au point que les profils en forme de ciseaux des éléments repoussoirs se recouvrent complètement au centre (M) des paquets de repoussoirs, de sorte qu'il ne demeure plus d'ouverture traversante entre les deux profils en forme de ciseaux, tandis que les profils latéraux en forme de ciseaux (6, 11) des éléments repoussoirs extérieurs (1, 2) ne se recouvrent que partiellement, de sorte que les zones d'ouverture correspondantes (10a, b) demeurent entre les profils.

9. Dispositif de moulage selon l'une au moins des revendications 1 à 8,
**caractérisé en ce que**
le dispositif comprend en outre un équipement qui déplace les paquets de repoussoirs (8, 9) l'un vers l'autre, perpendiculairement à la direction de transport du cordon de saucisse rempli (7) ou déplace les paquets de repoussoirs l'un vers l'autre, le long d'une courbe.

10. Procédé pour mouler des bouts arrondis aux extrémités de saucisses et pour subdiviser et/ou séparer en portions individuelles un cordon de saucisse rempli de masse pâteuse, produit de manière continue, avec un dispositif de moulage selon l'une au moins des revendications 1 à 9, avec les étapes suivantes :
- transporter un cordon de saucisse rempli (7) entre les deux paquets de repoussoirs (8, 9) situés en vis-à-vis,
- déplacer l'un vers l'autre les paquets de repoussoirs (8, 9) et repousser la masse pâteuse, des éléments repoussoirs (1 à 5) des paquets de repoussoirs (8, 9), plats et disposés de manière décalée les uns par rapport aux autres, venant en prise l'un derrière l'autre de telle façon qu'entre les deux paquets de repoussoirs (8, 9) il se crée deux zones d'ouverture (10a, b), qui s'élargissent dans la direction de transport ou à l'opposé de la direction de transport, un bout arrondi étant chaque fois produit aux extrémités de saucisses.

11. Dispositif de moulage selon la revendication 10,
**caractérisé en ce que**
après avoir été repoussé, soit le cordon de saucisse rempli est encore attaché, seule de la masse pâteuse étant alors repoussée, soit l'enveloppe de saucisse est séparée pour produire des portions individuelles.

12. Procédé selon l'une des revendications 10 ou 11,
**caractérisé en ce que**
pour étrangler le cordon de saucisse (7) les éléments repoussoirs (1 à 5) sont déplacés les uns vers les autres et viennent en prise les uns dans les autres au point que les profils en forme de ciseaux se recouvrent partiellement aux extrémités antérieures des éléments repoussoirs, de sorte qu'il demeure une ouverture traversante (10a, b) entre les profils en forme de ciseaux.

13. Procédé de moulage selon l'une des revendications 10 à 12,
**caractérisé en ce que**
pour séparer le cordon de saucisse (7) rempli, les éléments repoussoirs (1 à 5) des paquets de repoussoirs respectifs (8, 9), sont déplacés les uns vers les autres au point que les profils (3) en forme de ciseaux se recouvrent totalement au milieu (M) des paquets de repoussoirs (8, 9) de sorte qu'il ne reste plus d'ouverture entre les profils, tandis que les profilés latéraux en forme de ciseaux des éléments repoussoirs extérieurs (1, 2) ne se recouvrent que partiellement, de sorte que les zones d'ouverture (10a, b) correspondantes demeurent entre les profils.

14. Procédé de moulage selon l'une des revendications 10 à 13,
**caractérisé en ce que**
pour repousser, les éléments repoussoirs (1 à 5) des paquets de repoussoirs (8, 9) se déplacent transversalement à la direction de transport du cordon de saucisse rempli, tandis que le transport du cordon de saucisse est brièvement stoppé.

15. Procédé de moulage selon l'une des revendications 10 à 14,
**caractérisé en ce que**
les paquets de repoussoirs (8, 9) sont déplacés l'un vers l'autre sur une trajectoire de courbe, de sorte que les paquets de repoussoirs sont déplacés pendant l'étranglement et/ou la séparation dans la direction de transport du cordon de saucisse.
